# EUROPÄISCHE PATENTSCHRIFT

(11) **EP 1 131 583 B1**
(45) Veröffentlichungstag und Bekanntmachung des Hinweises auf die Patenterteilung: **14.04.2004**
(21) Anmeldenummer: 99942692.7
(22) Anmeldetag: 17.09.1999
(51) Int. Cl.: F24D 12/02, F24F 12/00, F28D 20/00

(54) **VORRICHTUNG UND VERFAHREN ZUM HEIZEN UND/ODER LÜFTEN EINES RAUMES**
DEVICE AND METHOD FOR HEATING AND/OR VENTILATING A ROOM
DISPOSITIF ET PROCEDE POUR CHAUFFER ET/OU AERER UNE PIECE

(30) Priorität: 20.11.1998 CH 232598
(43) Veröffentlichungstag der Anmeldung: 12.09.2001
(73) Patentinhaber: Häusler, Peter, 8008 Zürich (CH)
(72) Erfinder: Häusler, Peter, 8008 Zürich (CH)
(74) Vertreter: Wenger, René
(86) Internationale Anmeldenummer: PCT/CH1999/000445
(87) Internationale Veröffentlichungsnummer: WO 2000/031473

(56) Entgegenhaltungen:
- EP-A- 0 284 342
- DE-A- 3 244 373
- DE-A- 3 308 700
- FR-A- 2 521 698
- FR-A- 2 525 746
- GB-A- 2 136 107
- GB-A- 2 220 475
- US-A- 1 525 199
- "ENERGIEZUINIG BOUWEN MET BEHULP VAN DE DRU-ENERGIESCHACHT" KLIMAAT BEHEERSING,NL,C.MISSET B.V. DOETINCHEM, Bd. 15, Nr. 8, Seite 276-278 XP002067964

## Beschreibung

Die Erfindung betrifft eine Vorrichtung zum Heizen und/oder Lüften eines Raumes gemäss dem Oberbegriff von Anspruch 1. Eine solche Vorrichtung ist z.B. aus der DE-A-3 308 700 bekannt. Mit einer derartigen Vorrichtung soll erreicht werden, dass Bestandteile der Heizung und Bestandteile der Lüftung auf zweckmässige Weise zusammengelegt und gemeinsam genutzt werden können.

Durch die GB-A-2 220 475 ist ein Lüftungssystem bekannt geworden, bei dem die Verbrennungsgase einer Heizung und im Raum anfallende Abluft dazu benutzt werden, in einem Wärmetauscher Frischluft vorzuwärmen. Die Abluft stammt dabei von Dampfabzughauben oder Badezimmerabzügen.

Gemäss der CH-A-665 270 kann die Abgasleitung einer Verbrennungsheizung während der Stillstandszeit der Heizung mittels einer Umlenkklappe als Entlüftungsleitung genutzt werden. Frischluft kann dem Raum über eine Leitung zugeführt werden, welche einen von der Abgasleitung beaufschlagten Wärmetauscher durchläuft.

Die DE-A-33 08 700 betrifft eine Heiz- und Lüftungseinheit mit einer Wärmequelle, einer Luftzufuhrleitung, einer Luftabfuhrleitung, sowie mit einem Wärmetauscher im Abgasstrom. Mit der Anordnung soll eine möglichst optimale Ausnützung der Verbrennungswärme sowie die Vermeidung von Kondenswasser erreicht werden.

Die GB-A-2 220 475 beschreibt ein Ventilationssystem, bei dem die Abgase einer Wärmequelle und die Raumabluft dazu benutzt werden, um zugeführte Frischluft über einen Wärmetauscher zu erwärmen.

Die bekannten Vorrichtungen haben den Nachteil, dass die der Heizung und der Lüftung dienenden Komponenten nicht konsequent aufeinander abgestimmt sind, sodass kein wirklicher Synergieeffekt erzielt werden kann. Ausserdem werden die bei grossen Gebäuden teilweise sehr langen Transportstrecken für Abluft und Frischluft überhaupt nicht für die Wärmerückgewinnung genutzt.

Es ist daher eine Aufgabe der Erfindung, eine Vorrichtung der Eingangs genannten Art zu schaffen, die als bauliche Einheit sowohl der Heizung als auch der Lüftung dient und zwar unter optimalen Betriebsbedingungen während und ausserhalb der Heizperiode. Dabei soll der konstruktive Aufwand reduziert und bei gleichzeitiger Optimierung des Wärmehaushalts eine Kostensenkung der ganzen Anlage erreicht werden. Diese Aufgabe wird erfindungsgemäss mit einer Vorrichtung gelöst, welche die Merkmale im Anspruch 1 aufweist.

Die gemeinsame Führung von Abgas und Frischluft als paralleles Kanalsystem bewirkt einen langgestreckten Gegenstromwärmetauscher, bei dem die langen Zufuhr- und Abfuhrwege optimal für den Wärmehaushalt genutzt werden können. Jede Verbrennungsheizung benötigt ohnehin zwingend einen Kamin für die Abfuhr der Verbrennungsgase. Ebenso muss für die Lüftung frische Aussenluft meist über lange Strecken herangeführt bzw. verbrauchte Raumluft wieder abgeführt werden. Die gemeinsame Leitungsführung über eine Wärmetauscherstrecke bewirkt somit nicht nur eine verbesserte Wärmerückgewinnung, sonder auch eine erhebliche Vereinfachung der Installationen und eine Reduzierung der Baukosten. So könnte beispielsweise mittels der Durchleitung von Wasser durch den Zusatzkanal die im Kanalsystem gespeicherte Wärme relativ rasch abgeführt werden. In diesem Zusammenhang wäre auch der Einsatz einer Wärmepumpe denkbar, welche mit dem Zusatzkanal in Wirkverbindung steht. Ausserdem könnte Brauchwasser in den Zusatzkanal eingespeist und dadurch gegebenenfalls vor der Aufheizung in einem Boiler vorgewärmt werden. Die besonders optimale Bauweise für das Kanalsystem ergibt sich, weil es aus einer Mehrzahl von Kanalmodulen besteht, die nebeneinander angeordnet sind und von denen jedes wenigstens einen Abfuhrkanal und wenigstens einen Zufuhrkanal aufweist. Mit dieser Modulbauweise können jeweils je nach gewünschter Leistungsfähigkeit oder nach den baulichen Gegebenheiten den speziellen Verhältnissen angepasste Kanalsysteme erstellt werden.

Der Einsatz der Wärmepumpe im vorliegenden Fall ist völlig neuartig und nicht zu vergleichen mit den üblichen Heizwärmepumpen mit hoher Leistung (ca 8 kW). Die Wärmepumpe niedriger Leistung (ca. 1 kW) dient nur der Brauchwasseraufbereitung und wäre auch ausserhalb der Heizperiode in Betrieb. Sie nutzt als Quelle den Speicherkamin, der auch im Sommer Wärme speichert.

Schliesslich wäre auch die Kombination einer direkten Brauchwassererwärmung mit einer indirekten über die Wärmepumpe möglich.

Das Kanalsystem kann wenigstens teilweise den Kamin der Heizvorrichtung bilden. Diese kaminartige Komponente erlaubt auf besonders einfache Weise eine regelmässige Kontrolle und Reinigung. Alternativ oder gleichzeitig kann das Kanalsystem aber auch wenigstens teilweise horizontal oder mit einer Neigung von weniger als 30° zur Horizontalen verlaufen. Dies kann besonders in denjenigen Fällen zweckmässig sein, in denen keine ausreichende vertikale Kaminhöhe erreicht wird, also beispielsweise bei Flachbauten.

Um auf der Wärmetauscherstrecke einen optimalen Effekt zu erzielen, sollte diese eine Länge von wenigstens 2,5 Metern aufweisen. Der Wirkungsgrad des Kanalsystems bezüglich seiner Wärmetauschereigenschaften hängt jedoch weitgehend auch von der Materialwahl und von der Konstruktion ab.

Besonders vorteilhaft sind die Abgasleitung und die Frischluftleitung mit wenigstens je einem Gebläse versehen. Dabei kann jeweils eine Zwangsströmung im gewünschten Umfang erreicht werden. Eine optimale Steuerung wird dabei dadurch ermöglicht, dass die Gebläse mit einer Steuervorrichtung verbunden sind, mit deren Hilfe ihre Förderleistung steuerbar ist. Die Steuervorrichtung ist vorzugsweise auch mit der Steuerung der Heizung gekoppelt und kann auf verschiedene Parameter wie z.B. Temperatur, Zeit, Luftmenge usw. eingestellt werden.

Vorzugsweise ist die Wärmequelle mit dem Raum über eine Zuluftleitung verbunden, wobei die Abluftleitung als Bypassleitung zwischen der Zuluftleitung und der Abgasleitung ausgebildet ist. So kann die Abluft aus dem Raum ganz oder teilweise der Wärmequelle zugeführt werden, bzw. sie kann unter Umgehung der Wärmequelle ganz oder teilweise der Abgasleitung zugeführt werden. Ersichtlicherweise ist es damit möglich, dem Raum eine Abluftmenge zu entziehen, welche grösser ist als die von der Wärmequelle benötigte Zuluftmenge.

Das Kanalsystem bzw. die einzelnen Kanalmodule können aus Metall, insbesondere aus Aluminium oder aus einer Aluminiumlegierung bestehen. Aus diesem Werkstoffen lassen sich auch relativ komplizierte Profilquerschnitte durch Extrusion herstellen. Alternativ können sie aber auch aus einem mineralischen Werkstoff, insbesondere aus Beton bestehen. Je nach Wahl des Werkstoffes kann das Kanalsystem auch die Funktion eines Wärmespeichers übernehmen.

Analog zu bekannten Lüftungsvorrichtungen können selbstverständlich mehrere Räume parallel mit je einer separaten Frischluftzweigleitung und einer Abluftzweigleitung an das Kanalsystem anschliessbar sein. Dabei kann die umwälzbare Luftmenge pro Raum vorzugsweise auch individuell einstellbar sein.

Die Wärmequelle kann mittels einer Zuluftleitung mit Verbrennungsluft versorgbar sein, welche mit der Abluftleitung verbunden ist. In einem derartigen Fall bildet die Abluftleitung eine Bypass-Leitung, mit welcher die Wärmequelle überbrückt werden kann. Alternativ könnte die Zuluftleitung aber auch völlig separat geführt werden, sodass parallel zur Abluftleitung und ggf. nur an ganz bestimmten Stellen Verbrennungsluft aus dem Raum aufgenommen wird.

Je nach Anwendungsfall müssen bei bestimmten Leitungen auch noch schalldämpfende Mittel eingebaut werden, damit beispielsweise Brennergeräusche nicht auf Wohnräume übertragen werden können.

Die erfindungsgemässe Vorrichtung eignet sich für den Einbau in Gebäuden für private oder gewerbliche Zwecke.

Schliesslich ist eine Kombination der Vorrichtung mit anderen wärmetechnischen Komponenten möglich wie z.B. Wärmepumpen, Brauchwasserwärmung usw. Besondere Vorteile können dabei erzielt werden, wenn das Kanalsystem wenigstens teilweise eine Wärmespeicherkapazität aufweist. So kann beispielsweise in der Nacht kühle Aussenluft durch das Kanalsystem geleitet werden, welche dem Wärmespeicher Wärme entzieht und dabei erwärmt wird. Bei den höheren Tagestemperaturen wird dagegen dem Wärmespeicher wiederum Wärme zugeführt und dadurch die Aussenluft gekühlt.

Die Erfindung betrifft auch ein Verfahren zum Heizen und/oder Lüften eines Raumes mit den Merkmalen im unabhängigen Anspruch 14.

Insbesondere bei Öl, Kohle oder Holz als Brennstoffe besteht die Gefahr, dass feste Verbrennungsrückstände auf der Kamininnenseite antrocknen und dabei eine permanente Gefahrenquelle für Kaminkorrosion bilden.

Dies wird bei richtiger Auslegung des Systems dadurch vermieden, dass der wärmeträge Tauschkamin gegen den Mündungsbereich hin permanent tiefere Temperaturen aufweist. Die "Kühlung" erfolgt immer von oben, einmal durch kalte Frischluft, dann aber auch, je nach Systemvariante, durch kaltes Brauchwasser, und/oder durch eine Wärmepumpe, die die immer noch vorhandenen Überschüsse kurz vor dem Verlassen des Hauses als Wärmequelle verwendet. Dadurch wird der Taupunkt für sämtliche Verbrennungsabgase (Gas, Öl, Holz, Kohle) andauernd und weit unterschritten, sodass ein permanentes, fast völliges Auskondensieren der Abgase gewährleistet werden kann, und zwar unabhängig von der Rücklauftemperatur der Wärmeerzeugung. In dieser Anordnung entsteht zwangsläufig das letzte und somit sauberste Kondensat immer am obersten Punkt des Kamins, und benetzt beim Ablaufen permanent die Wandung der ganzen darunterliegenden Abgasleitung. Dies führt zu einem Abspülen der Verbrennungsrückstände, sowie zu einem verbesserten Wärmeübergangswert zwischen Abgas und Wandung.

Die zusätzliche Kopplung des Kamins mit einer Wärmepumpe bildet eine weitere vorteilhafte Option. Während der Heizsaison können wie erwähnt die immer vorhandenen Verbrennungsüberschüsse genutzt werden, und ausserhalb der meist relativ kurzen Heizsaison ergeben sich in jedem gut isolierten Haus durch Sonneneinstrahlung innere Luftwärmeüberschüsse, die mit Hilfe der Lüftungsfunktion in den wärmeträgen Kamin eingetragen und zwischengelagert, einer Wärmepumpe als Wärmequelle dienen können. Diese kann somit minimal dimensioniert mit langen Laufzeiten und sehr guter Arbeitszahl betrieben werden, und bildet eine ideale Ergänzung zur Verbrennungsfunktion.

Ausführungsbeispiele der Erfindung und andere Ausführungsbeispiele sind in den Zeichnungen dargestellt und werden nachstehend genauer beschrieben. Es zeigen:
- Figur 1: eine schematische Darstellung einer erfindungsgemässen Vorrichtung am Beispiel einer Gas-, Öl-, Holz- oder Kohleheizung,
- Figur 2: ein weiteres Ausführungsbeispiel mit mehreren parallel geschalteten Räumen,
- Figur 3: eine perspektivische Darstellung mehrerer nebeneinanderliegender Kanalmodul aus Metall,
- Figur 4: ein Querschnitt durch ein alternatives Ausführungsbeispiel eines Kanalmoduls aus Metall,
- Figur 5: ein Querschnitt durch ein alternatives Ausführungsbeispiel eines Kanalmoduls aus einem mineralischen Werkstoff,
- Figur 6: ein Längsschnitt durch einen Teil des Kanalmoduls gemäss Figur 5 in vergrösserter Darstellung,
- Figur 7: eine perspektivische Darstellung mehrerer nebeneinander angeordneter Kanalmodulen aus mineralischem Werkstoff,
- Figur 8: einen Querschnitt durch ein weiteres alternatives Ausführungsbeispiel eines Kanalmoduls aus mineralischem Werkstoff,
- Figur 9: eine schematische Ansicht eines Gebäudes mit einem aus Modulen gemäss Figur 8 bestehenden Kamin,
- Figur 10: einen Querschnitt durch ein weiteres Kanalmodul aus mineralischem Werkstoff mit Zusatzkanal,
- Figur 11: eine Seitenansicht des Moduls gemäss Figur 10, und
- Figur 12: eine perspektivische Darstellung des Moduls gemäss Figur 10.

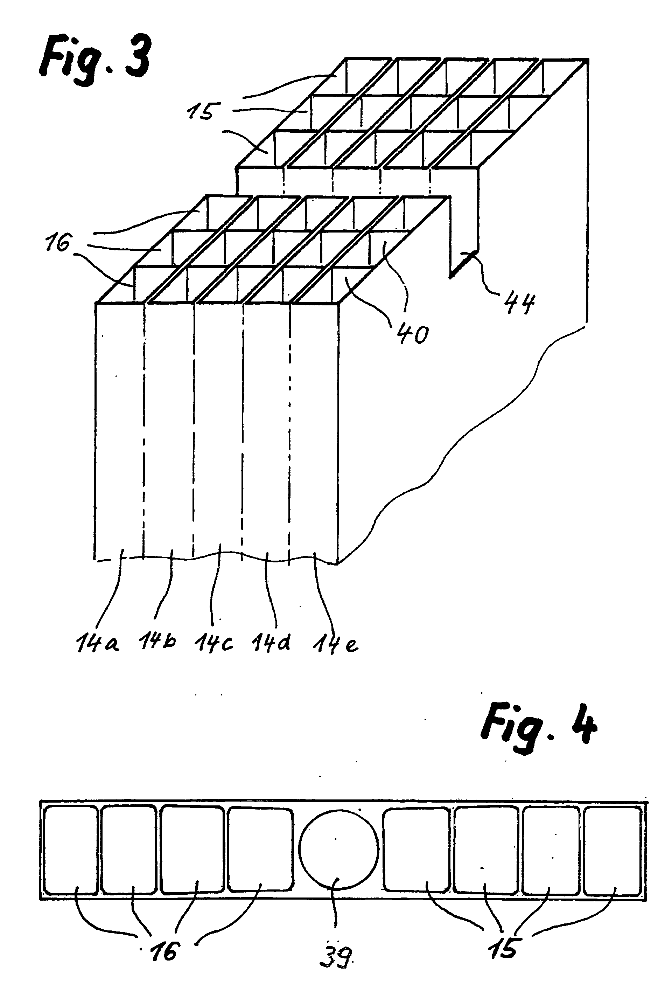

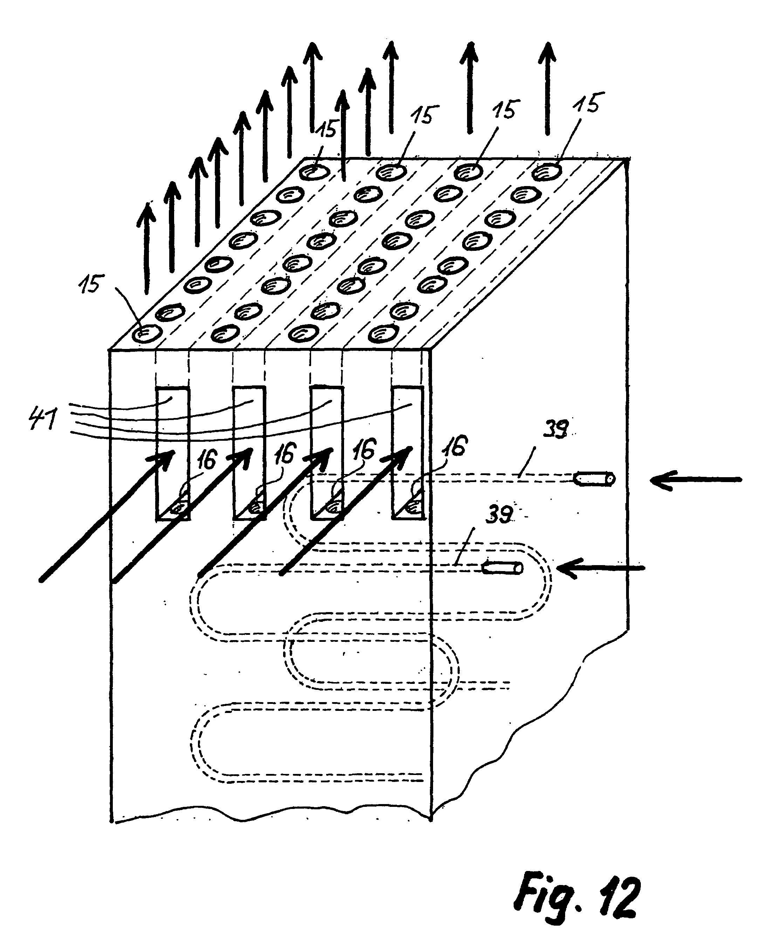

Die Ausführungsbeispiele, die in den Figuren 3 und 5 bis 12 gezeigt und in den entsprechenden Teilen der folgenden Beschreibung erläutert werden fallen nicht unter den Schutzbereich der Ansprüche.

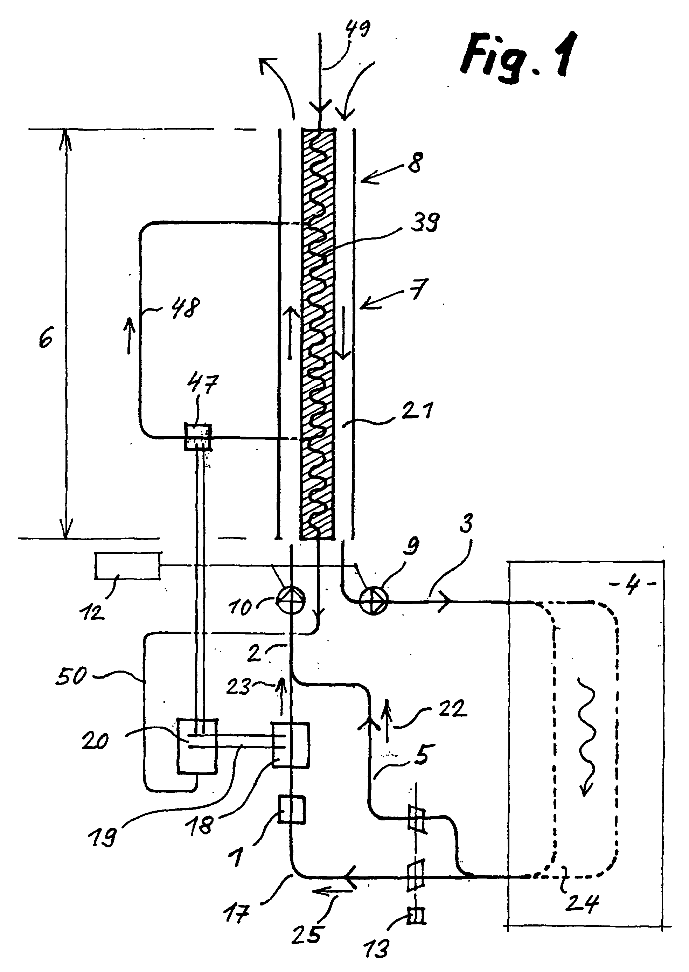

Die in Figur 1 dargestellte Vorrichtung verfügt über eine Wärmequelle 1, bei der es sich um eine alle gängigen Brennstoffe verwendbare Feuerung, z.B. um einen Ölbrenner handeln kann. Die Abgase 23 vom Verbrennungsprozess werden über eine Abgasleitung 2 abgeführt. Der Brenner 1 ist mit einem Heizkessel 18 kombiniert, der über einen Wasserkreis 19 mit einem Wasserspeicher 20 verbunden ist. Der Wasserkreis 19 dient auf an sich bekannte Weise der Wärmeverteilung.

Für die Lüftung des Raumes 4 wird Frischluft 21 über eine Frischluftleitung 3 mit Hilfe des Gebläses 9 angesaugt. Die verbrauchte Raumluft 24 wird als Abluft 22 über eine Abluftleitung 5 mit Hilfe eines Gebläses 10 wiederum abgesaugt.

Die Abluftleitung 5 mündet nach dem Heizkessel 18 in die Abgasleitung 2. Zum Abführen der Abgase dient ebenfalls das Gebläse 10.

Der Brenner 1 wird mit Zuluft 25 versorgt, welche dem Raum 4 entzogen wird. Zu diesem Zweck ist eine Zuluftleitung 17 vorgesehen, welche mit der Abluftleitung 5 verbunden ist. Mittels einer Doppelklappe 13 können die Abluftleitung 5 und die Zuluftleitung 17 gegenläufig oder auch einzeln geöffnet oder geschlossen werden. Zur Koordination und Steuerung der einzelnen Ströme sind die Gebläse 9 und 10 mit einer Steuervorrichtung 12 verbunden, welche vorzugsweise auch mit der hier nicht dargestellten Brennersteuerung und mit der Steuerung der Doppelklappe 13 gekoppelt ist.

Die Abgasleitung 2 und die Frischluftleitung 3 sind über eine Wärmetauscherstrecke 6 als paralleles Kanalsystem 7 ausgebildet, deren Kanäle wärmemässig in Wirkverbindung miteinander stehen und in dem die Ströme im Gegenstrom führbar sind. Dieses Kanalsystem bildet dabei gleichzeitig ein Kamin 8, das sich beispielsweise über mehrere Stockwerke erstrecken könnte.

Beim Betrieb der Vorrichtung wird zur Belüftung des Raums 4 Frischluft durch das Kanalsystem 7 angesaugt. Die Abluft aus dem Raum 4 wird in der Heizperiode ganz oder teilweise als vorgewärmte Zuluft dem Brenner 1 zugeführt und als Abgas wiederum an die Aussenatmosphäre abgegeben. Durch den Wärmetausch im Kanalsystem wird ein besonders hoher Heizwirkungsgrad erreicht.

Die Dauerfunktion der Raumlüftung erbringt trotz der Wärmerückgewinnung einen dauernden leichten Wärmeverlust, der als Kühlung von der Mündung her in den trägen Kamin eingetragen und gespeichert wird. Die periodisch einsetzende Verbrennung mit ihrer immer noch beträchtlichen Restwärme (insbesondere in Form von Kondensationswärme) füllt den Kamin von unten her wieder auf. Dessen Wandung stellt sich dank Wärmeträgheit auf eine Mitteltemperatur zwischen diesen Einwirkungen. Diese Mitteltemperatur "pendelt" leicht nach oben und nach unten gemäss dem periodischen Wärmeeintrag, respektive Wärmeentzug. Sowohl die "Verlustleistung" der Lüftung, wie auch die Heizleistung der Restwärme (der Verbrennungsabgase) verlaufen im Gleichschritt, beide direkt proportional zur schwankenden Aussentemperatur, sodass diese Kaminmitteltemperatur nur relativ leicht pendelt; Heizung und Kühlung gleichen sich aus. Diverse Synergien der beiden Prozesse sind die Folge, u.a. ein sehr hoher Wirkungsgrad der Verbrennung aber z.B. auch eine Frostsicherung für die Lüftung bei grosser Kälte, oder eine angenehme Vorwärmung der in den Raum tretenden Zuluft, die dann am grössten ist wenn in Folge tiefer Aussentemperatur die Wärmeerzeugung grössere Beiträge liefert.

Neben der Abgasleitung 2 und der Frischluftleitung 3 verfügt der Kamin 8 über einen Zusatzkanal 39, der sich ebenfalls über die Wärmetauscherstrecke 6 oder wenigstens über einen Teil derselben erstreckt. Der Zusatzkanal ist eingangsseitig mit einem Brauchwasseranschluss 49 verbunden, der unter dem ortsüblichen Wasserdruck Brauchwasser in das System einspeist. Die Ausgangsleitung 50 des Zusatzkanals führt zum Wasserspeicher 20, wobei bei jeder Brauchwasserentnahme vorgewärmtes Brauchwasser zugeführt wird. Gleichzeitig ist die Zusatzleitung 39 aber auch an einen Wärmepumpenkreislauf 48 angeschlossen, der mit einer Wärmepumpe 47 versehen ist. Diese steht ebenfalls in Wirkverbindung mit dem Wasserspeicher 20 und erhöht damit die Temperatur des Brauchwassers.

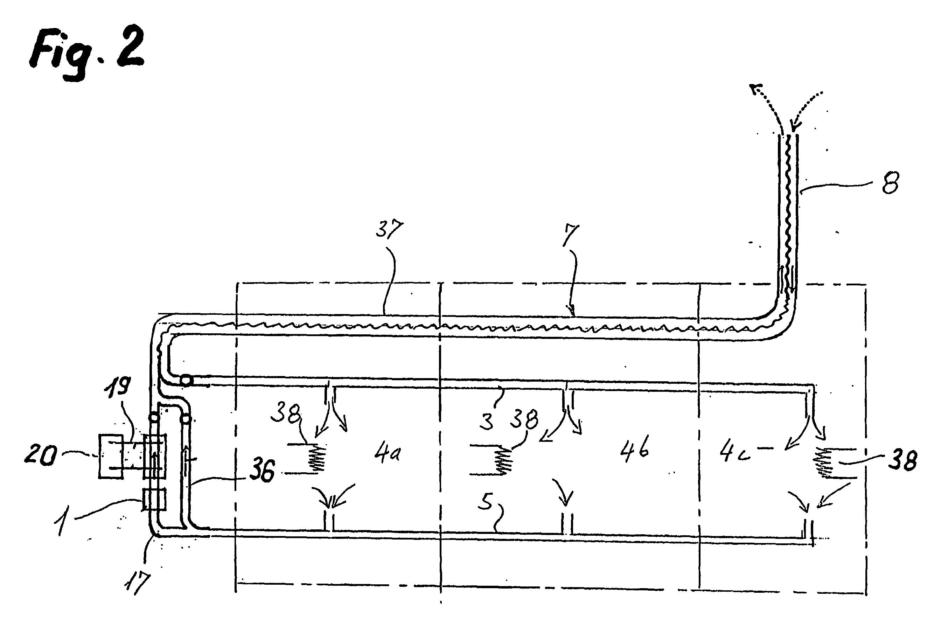

Figur 2 zeigt die Parallelschaltung mehrerer Räume 4a, 4b, 4c über eine gemeinsame Frischluftleitung 3 und eine gemeinsame Abluftleitung 5. Die Primärheizung in den einzelnen Räumen erfolgt z.B. über die Radiatoren 38, die an den Wasserkreis 19 angeschlossen sind. Die gewünschte Lüftungsintensität kann in jedem Raum individuell eingestellt werden. Alternativ könnte die Zuluftleitung 17 auch einen minimalen Grundbedarf von Zuluft über eine selbständig öffnende Klappe oder dergleichen erhalten. Im Bereich der Heizvorrichtung bildet die Abluftleitung 5 ersichtlicherweise eine Bypass-Leitung 36.

Beim Ausführungsbeispiel gemäss Figur 2 ist das Kanalsystem 7 nur teilweise als vertikaler Kamin 8 ausgebildet. Zur Optimierung des Wirkungsgrades verfügt das Kanalsystem auch noch über einen etwa horizontalen Abschnitt 37.

Die modulare Bauweise eines Kanalsystems 7 ist anhand der Figuren 3 bis 7 näher beschrieben. Dabei zeigt Figur 3 mehrere nebeneinander liegende Kanalmodule 14a bis 14e aus Aluminium oder aus einer Aluminiumlegierung. Jedes Kanalmodul verfügt über eine Gruppe von Abfuhrkanälen 15 und Zufuhrkanälen 16. An einem Endabschnitt des Kanalsystems wird der Mittelbereich 44 ausgefräst, sodass die Abfuhrkanäle 15 und die Zufuhrkanäle 16 auf einfache Weise abgegriffen und in getrennten Leitungen weitergeführt werden können. Die einzelnen Kanalmodule lassen sich auf einfache Weise als extrudierte Profile herstellen.

Das Kanalmodul gemäss Figur 4 verfügt ebenfalls über Gruppen von Abfuhrkanälen 15 und Zufuhrkanälen 16. Dazwischen ist jedoch ein Zusatzkanal 39 angeordnet, durch den ein drittes Medium wie z.B. Wasser für die Kaltwasservorwärmung oder eine Wärmeträgerflüssigkeit für den Betrieb einer Wärmepumpe eingekoppelt werden kann. Ersichtlicherweise kann über dieses dritte Medium auch der Wärmeaustausch zwischen den Abfuhrkanälen 15 und den Zufuhrkanälen 16 beeinflusst werden.

Die Aussenabmessungen der Kanalmodule sind dem zu erwartenden Luftumsatz und der gewünschten Tauschleistung angepasst. Die Länge wird so gewählt, dass möglichst wenige Stossverbindungen nötig sind. Es ist denkbar, den gesamten Kamin als Einheit bereitzustellen und im Gebäude einzubauen.

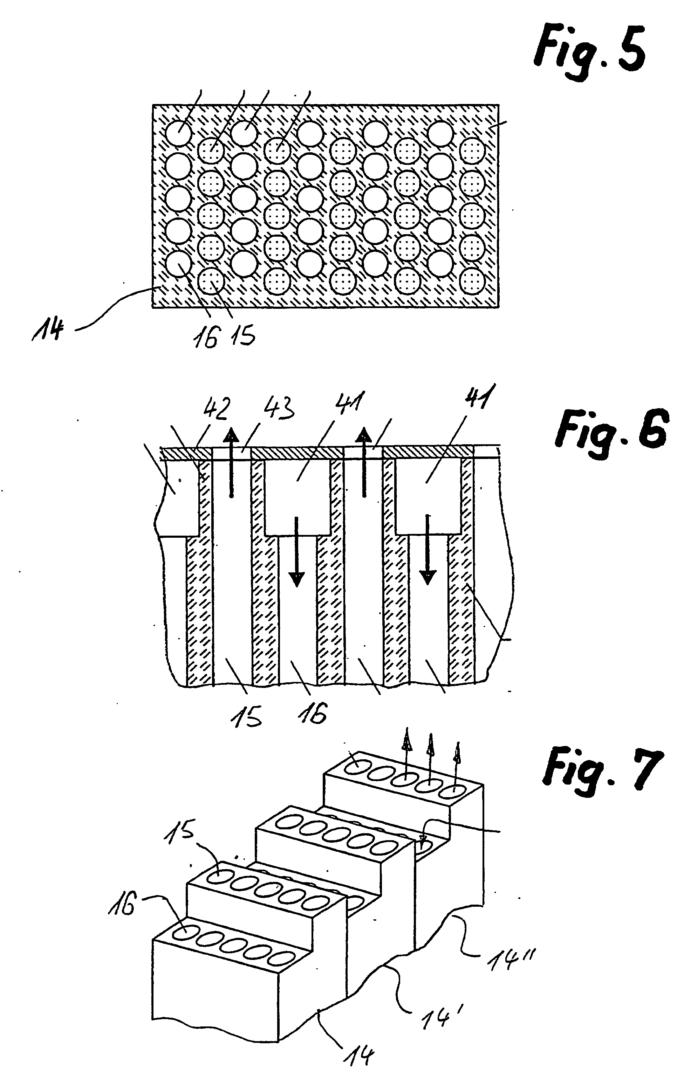

Gemäss den Figuren 5 und 6 besteht ein monolithisch ausgebildetes Kanalmodul 14 aus Faserbeton. Es ist mit einer Vielzahl von parallelen Abfuhrkanälen 15 und Zufuhrkanälen 16 durchsetzt. Die Kanäle sind dabei wechselweise in Reihen angeordnet. Jede Reihe führt entweder nur Frischluft oder nur Abgas bzw. Abluft. Die einzelnen Kanäle sind über dem Mineralstoffkörper thermisch gekoppelt.

Die reihenweise Anordnung hat auch den Vorteil, dass die Kanäle an den Enden einfach entflochten werden können. Dies ist in Figur 6 dargestellt, die einen Schnitt durch das obere Ende des Kanalmoduls 14 zeigt. Das untere Ende ist dabei im wesentlichen gleich aufgebaut. Wie aus der Figur ersichtlich, sind im Bereich der Reihen der Zufuhrkanäle 16 parallele Nuten 41 eingefräst. Die Enden dieser Kanäle liegen dabei auf einem tieferen Niveau als die Enden der Abfuhrkanäle 15. Diese Struktur erlaubt eine einfache Trennung bzw. Zusammenführung der Kanäle z.B. mit Hilfe einer Platte 42 mit Längsschlitzen 43. Wie mittels Pfeilen angedeutet, fliesst die Frischluft durch die Nuten 41 in die Zufuhrkanäle 16, während die Abluft bzw. die Abgase durch die Schlitze 43 austreten.

Alternativ kann die Entflechtung der Kanäle gemäss Figur 7 auch dadurch geschehen, dass mehrere gestufte Einzelmodule 14, 14', 14'' nebeneinander geschichtet werden.

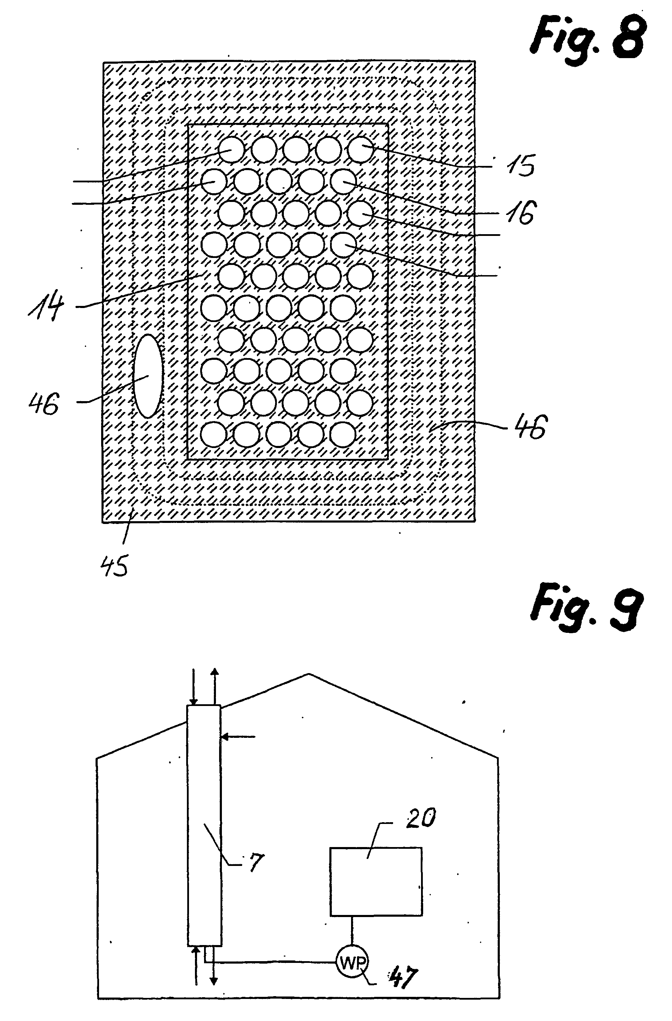

Eine weitere Ausführung eines mineralischen Kanalmoduls 14 ist in horizontalem Schnitt in Figur 8 dargestellt. Das Modul selbst wird von einem extrudierten Faserbetonprofil gebildet, welches etwa gleich ausgestaltet ist, wie jenes gemäss Figur 5. Das Module mit den Gruppen von Abfuhrkanälen 15 und Zufuhrkanälen 16 ist allseitig von einem Hilfskörper 45 aus Gussbeton umgossen. Im Hilfskörper verläuft hier eine spiralförmige Zusatzleitung 46 zum Einkoppeln eines dritten Mediums, z.B. einer Wärmetauscherflüssigkeit.

Die Anwendung des Moduls gemäss Figur 8 ist in Figur 9 dargestellt. Hier dient das Kanalsystem 7 zur Temperaturkontrolle in einem Gebäude. Wie durch die Pfeile angedeutet, kann das Kanalsystem in verschiedener Weise verwendet werden, z.B.:
a) Frischluft durchläuft das Kanalsystem von oben nach unten und wird in die Innenräume geblasen, während gleichzeitig gegenläufig Abluft aus den Innenräumen von unten nach oben durch das Kanalsystem geführt und nach aussen abgegeben wird. Dadurch wird die Temperatur der Zuluft an diejenige der Abluft angeglichen.
b) Raumluft wird als Umluft durch das Kanalsystem geblasen. Je nach Temperatur der Luft und des Kanalsystems kann dabei ein Wärmeübertrag von der Luft zum Kanalsystem oder umgekehrt stattfinden. Die Raumluft kann z.B. durch die Zufuhrkanäle 16 geführt werden, in dem sie über eine Öffnung 32 (Figur 2) eingesaugt und über den Feuerraum 26 wieder abgegeben wird.
c) Aussenluft wird durch das Kanalsystem geblasen. Dadurch kann z.B. in der Nacht das Kanalsystem abgekühlt werden. Die so erwärmte Abluft kann je nach Bedarf an den Innenraum oder nach aussen abgegeben werden.

Gleichzeitig ist das Kanalsystem über die Zusatzleitung 46 mit einer Wärmepumpe 47 verbunden. Die Wärmepumpe kann dazu verwendet werden, dem Kanalsystem 7 Wärme zuzuführen oder ihm Wärme zu entziehen, indem sie kaltes oder warmes Wasser durch die Leitung 46 pumpt. Die Wärmepumpe ist zusätzlich in bekannter Weise mit einem Wasserspeicher verbunden, z.B. mit einem Warmwasserspeicher. Dank der grossen Wärmekapazität des Kanalsystems 7 braucht die Wärmepumpe nicht sehr leistungsfähig zu sein. Wenn z.B. durch kurzzeitige intensive Sonneneinstrahlung die Temperatur im Innenraum einsteigt, wird Raumluft als Umluft durch das Kanalsystem geführt und erwärmt dieses, d.h. das Kanalsystem wird als Zwischenlager für den ansonsten auszulüftenden Wärmeüberschuss benutzt.

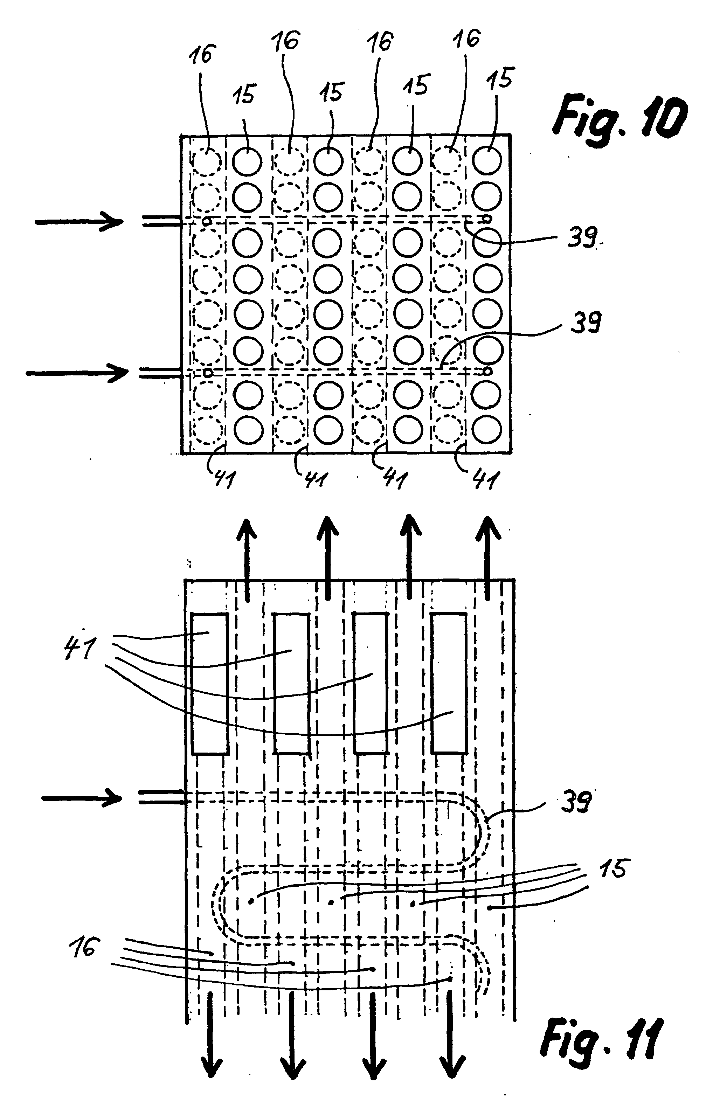

Die Figuren 10 bis 12 zeigen eine weitere Variante eines wärmespeichernden Kaminmoduls mit einem Zusatzkanal 39. Der Aufbau des aus Faserbeton extrudierten Moduls ist ähnlich wie beim Ausführungsbeispiel gemäss Figur 5 und 6. In einem homogenen Materialblock sind parallel nebeneinander im Wechsel Abfuhrkanäle 15 und Zufuhrkanäle 16 angeordnet. Die Einspeisung der Zuluft erfolgt über die Nuten 41, mit denen jeweils eine Reihe von Zufuhrkanälen 16 miteinander verbunden ist. Anders als beim Ausführungsbeispiel gemäss Figur 9 sind jedoch ein oder mehrere Zusatzkanäle 39 mäanderförmig zwischen den Kanälen 15 und 16 angeordnet. Diese Kanäle können in der Form einer Rohrschlange beim Giessen oder beim Extrudieren des Betonmoduls eingebettet werden.

## Patentansprüche

1. Vorrichtung zum Heizen und/oder Lüften eines Raumes (4)
- mit wenigstens einer durch einen Verbrennungsprozess aktivierbaren Wärmequelle (1),
- einer Abgasleitung (2) zum Abführen der Verbrennungsgase (23),
- einer Frischluftleitung (3) zum Zuführen von Frischluft (21) in den Raum (4),
- einer in die Abgasleitung (2) führenden Abluftleitung (5) zum Abführen von Abluft (22) aus dem Raum (4),
- wobei die Abgasleitung (2) und die Frischluftleitung (3) für den Wärmetausch zwischen der Frischluft und den Verbrennungsgasen bzw. der Abluft, zur Bildung eines Wärmetauschers auf einer Wärmetauscherstrecke (6) als etwa paralleles Kanalsystem (7) ausgebildet sind, deren Kanäle wärmemässig in Wirkverbindung miteinander stehen und in dem die Ströme im Gegenstrom führbar sind,
**dadurch gekennzeichnet, dass** das Kanalsystem (7) aus einer Mehrzahl von Kanalmodulen besteht, die nebeneinander angeordnet sind und von denen jedes wenigstens einen Abfuhrkanal (15) und wenigstens einen Zufuhrkanal (16) aufweist, und dass die Kanalmodule (7) wenigstens einen autonomen Zusatzkanal (39) aufweisen, der mit der Abgasleitung (2) und mit der Frischluftleitung (3) wärmemässig in Wirkverbindung steht, wobei durch den Zusatzkanal unabhängig von der Abgasleitung und von der Frischluftleitung ein flüssiges oder gasförmiges Medium derart leitbar ist, so dass der Wärmeaustausch zwischen der Abgasleitung und der Frischluftleitung beeinflussbar ist.

2. Vorrichtung nach Anspruch 1, **dadurch gekennzeichnet, dass** der Zusatzkanal mit einer Wärmepumpe(47) in Wirkverbindung steht, die mit einem Wasserspeicher verbunden ist.

3. Vorrichtung nach Anspruch 1 oder 2, **dadurch gekennzeichnet, dass** jedes Kanalmodul über je eine Gruppe von Abfuhrkanälen und Zufuhrkanälen verfügt.

4. Vorrichtung nach Anspruch 3, **dadurch gekennzeichnet, dass** der Zusatzkanal (39) zwischen der Gruppe von Abfuhrkanälen (15) und der Gruppe von Zufuhrkanälen (16) angeordnet ist.

5. Vorrichtung nach einem der Ansprüche 1 bis 4, **dadurch gekennzeichnet, dass** das Kanalsystem (7) wenigstens teilweise einen Kamin (8) der Heizvorrichtung bildet, wobei die Wärmetauscherstrecke eine Länge von wenigstens 2,5 Metern aufweist.

6. Vorrichtung nach einem der Ansprüche 1 bis 5, **dadurch gekennzeichnet, dass** die Abgasleitung (2) und die Frischluftleitung (3) mit wenigstens je einem Gebläse (9, 10) versehen sind.

7. Vorrichtung nach Anspruch 6, **dadurch gekennzeichnet, dass** die Gebläse mit einer Steuervorrichtung (12) verbunden sind und dass ihre Förderleistung zum Verändern der Intensität des Heizungs- und/oder Lüftungsprozesses steuerbar ist.

8. Vorrichtung nach einem der Ansprüche 1 bis 7, **dadurch gekennzeichnet, dass** die Wärmequelle (1) mit dem Raum (4) über eine Zufuhrleitung (17) verbunden ist und dass die Abluftleitung (5) als Bypassleitung zwischen der Zuluftleitung (17) und der Abgasleitung (2) ausgebildet ist, wobei die Abluft aus dem Raum ganz oder teilweise der Wärmequelle (1) zuführbar ist, bzw. unter Umgehung der Wärmequelle ganz oder teilweise der Abgasleitung zugeführbar ist.

9. Vorrichtung nach einem der Ansprüche 1 bis 8, **dadurch gekennzeichnet, dass** die Kanalmodule (14) hintereinander angeordnet sind.

10. Vorrichtung nach einem der Ansprüche 1 bis 9, **dadurch gekennzeichnet, dass** das Kanalsystem aus Metall, insbesondere aus Aluminium oder aus einer Aluminiumlegierung besteht.

11. Vorrichtung nach einem der Ansprüche 1 bis 9, **dadurch gekennzeichnet, dass** das Kanalsystem aus einem mineralischen Werkstoff, insbesondere aus Beton besteht.

12. Vorrichtung nach einem der Ansprüche 1 bis 11, **dadurch gekennzeichnet, dass** das Kanalsystem wenigstens teilweise eine Wärmespeicherkapazität aufweist.

13. Gebäude mit wenigstens einer Vorrichtung zum Heizen und/oder Lüften nach einem der Ansprüche 1 bis 12.

14. Verfahren zum Heizen und/oder Lüften eines Raumes, wobei
- durch Verbrennen eines Brennstoffs Heizwärme erzeugt wird,
- die Verbrennungsgase über eine Abgasleitung (2) abgeführt werden,
- dem Raum (4) über eine Frischluftleitung (3) Frischluft zugeführt wird,
- die Frischluft in einem Wärmetauscher vorgewärmt wird, der mit der Abgasleitung in Wirkverbindung steht,
- die Abluft aus dem Raum entweder vollständig als Zuluft dem Verbrennungsvorgang zugeführt wird,
- oder teilweise dem Verbrennungsvorgang zugeführt und teilweise in die Abgasleitung geleitet wird,
- oder vollständig in die Abgasleitung geleitet wird, und
- die Abluft bzw. die Verbrennungsgase einerseits und die Frischluft andererseits zum Wärmetausch über eine Wärmetauscherstrecke im Gegenstrom in einem Kanalsystem mit etwa parallelen Kanälen geführt werden,
**dadurch gekennzeichnet, dass** die Abluft bzw. die Verbrennungsgase und die Frischluft durch eine Mehrzahl von nebeneinander angeordneten Kanalmodulen geleitet werden, die zusammen das Kanalsystem bilden, und dass über die Wärmetauscherstrecke durch einen mit der Abgasleitung (2) und mit der Frischluftleitung (3) wärmemässig in Wirkverbindung stehenden, autonomen Zusatzkanal (39) in den Kanalmodulen ein zusätzliches flüssiges oder gasförmiges Medium derart in den Wärmetauscher eingespeist wird, dass der Wärmeaustausch zwischen der Abgasleitung und der Frischluftleitung beeinflusst wird.

15. Verfahren nach Anspruch 14, **dadurch gekennzeichnet, dass** in den autonomen Zusatzkanal Brauchwasser eingespeist und dadurch gegebenenfalls vor der Aufheizung in einem Boiler vorgewärmt wird.

16. Verfahren nach Anspruch 14, **dadurch gekennzeichnet, dass** die Zuführung oder die Abführung von Wärme über den Zusatzkanal mit einer Wärmepumpe (47) erfolgt, die mit einem Wasserspeicher verbunden ist.

17. Verfahren nach einem der Ansprüche 14 bis 16, **dadurch gekennzeichnet, dass** während einer Betriebsphase in den Wänden des Kanalsystems Wärme aus der Abluft bzw. aus den Abgasen oder aus der Frischluft gespeichert wird und während einer nachfolgenden Betriebsphase wieder an die Frischluft abgegeben wird.

## Claims

1. Apparatus for heating and/or ventilating a room (4) comprising
- at least one heat source ( 1) activatable by a combustion process,
- an exhaust gas conduit (2) for discharge of the combustion gases (23),
- a fresh air conduit (3) for feeding fresh air (21) into the room (4),
- an exhaust air conduit (5) leading into the exhaust gas conduit (2) for the discharge of exhaust air (22) from the room (4),
- wherein the exhaust gas conduit (2) and the fresh air conduit (3) for heat exchange between the fresh air and the combustion gases or the exhaust gas to form a heat exchanger on a heat exchanger section (6) are in the form of an approximately parallel passage system (7) whose passages are in thermal operative communication with each other and in which the flows can be passed in opposite relationship,
**characterised in that** the passage system (7) comprises a plurality of passage modules which are arranged in mutually juxtaposed relationship and each of which has at least one discharge passage (15) and at least one feed passage (16), and
that the passage modules (7) have at least one autonomous additional passage (39) which is in thermal operative communication with the exhaust gas conduit (2) and with the fresh air conduit (3), wherein a liquid or gaseous medium can be passed through the additional passage independently of the exhaust gas passage and of the fresh air passage so that heat exchange between the exhaust gas passage and the fresh air passage can be influenced.

2. Apparatus according to claim 1 **characterised in that** the additional passage is in operative communication with a heat pump (47) which is connected to a water storage means.

3. Apparatus according to claim 1 or claim 2 **characterised in that** each passage module has a respective group of discharge passages and feed passages.

4. Apparatus according to claim 3 **characterised in that** the additional passage (39) is arranged between the group of discharge passages (15) and the group of feed passages (16).

5. Apparatus according to one of claims 1 to 4 **characterised in that** the passage system (7) at least partially forms a chimney (8) of the heating apparatus, wherein the heat exchanger section is at least 2.5 metres in length.

6. Apparatus according to one of claims 1 to 5 **characterised in that** the exhaust gas conduit (2) and the fresh air conduit (3) are each provided with at least one respective fan (9, 10).

7. Apparatus according to claim 6 **characterised in that** the fans are connected to a control apparatus (12) and that the delivery output thereof is controllable for varying the intensity of the heating and/or ventilation process.

8. Apparatus according to one of claims 1 to 7 **characterised in that** the heat source (1) is connected to the room (4) by way of a feed conduit (17) and that the exhaust air conduit (5) is in the form of a bypass conduit between the air feed conduit (17) and the exhaust gas conduit (2), wherein the exhaust air from the room can be entirely or partially fed to the heat source (1) or can be entirely or partially fed to the exhaust gas conduit bypassing the heat source.

9. Apparatus according to one of claims 1 to 8 **characterised in that** the passage modules (14) are arranged one behind the other.

10. Apparatus according to one of claims 1 to 9 **characterised in that** the passage system comprises metal, in particular aluminium or an aluminium alloy.

11. Apparatus according to one of claims 1 to 9 **characterised in that** the passage system comprises a mineral material, in particular concrete.

12. Apparatus according to one of claims 1 to 11 **characterised in that** the passage system at least partially has a heat-storage capacity.

13. A building with at least one heating and/or ventilation apparatus according to one of claims 1 to 12.

14. A method of heating and/or ventilating a room wherein
- heating heat is produced by burning a fuel,
- the combustion gases are discharged by way of an exhaust gas conduit (2),
- fresh air is fed to the room (4) by way of a fresh air conduit (3),
- the fresh air is preheated in a heat exchanger which is in operative communication with the exhaust gas conduit,
- the exhaust air from the room is either completely fed as feed air to the combustion process
- or it is partially fed to the combustion process and partially passed into the exhaust gas conduit
- or it is passed completely into the exhaust gas conduit, and
- the exhaust air or the combustion gases on the one hand and the fresh air on the other hand are passed for heat exchange purposes by way of a heat exchanger section in opposite flow relationship in a passage system with approximately parallel passages,
**characterised in that** the exhaust air or the combustion gases and the fresh air are passed through a plurality of mutually juxtaposed passage modules which together form the passage system and that an additional liquid or gaseous medium is fed into the heat exchanger by way of the heat exchanger section through an autonomous additional passage (39) in the passage modules, which is in thermal operative communication with the exhaust gas conduit (2) and with the fresh air conduit (3), in such a way that heat exchange between the exhaust gas conduit and the fresh air conduit is influenced.

15. A method according to claim 14 **characterised in that** service water is fed into the autonomous additional passage and thereby possibly preheated prior to the heating operation in a boiler.

16. A method according to claim 14 **characterised in that** the feed or the discharge of heat is effected by way of the additional passage with a heat pump (47) connected to a water storage means.

17. A method according to one of claims 14 to 16 **characterised in that** during one operating phase heat from the exhaust air or from the exhaust gases or from the fresh air is stored in the walls of the passage system and is restored again to the fresh air during a subsequent operating phase.

## Revendications

1. Dispositif pour chauffer et/ou aérer une pièce (4), comprenant
- au moins une source de chaleur (1) apte à être activée grâce à un processus de combustion,
- une conduite de gaz brûlés (2) pour évacuer les gaz de combustion (23),
- une conduite d'air frais (3) pour amener de l'air frais (21) dans la pièce (4),
- une conduite d'évacuation d'air (5) qui mène à la conduite de gaz brûlés (2), pour évacuer l'air d'évacuation (22) de la pièce (4),
- la conduite de gaz brûlés (2) et la conduite d'air frais (3) étant conçues, pour l'échange de chaleur entre l'air frais et les gaz de combustion ou l'air d'évacuation, en vue de former un échangeur de chaleur sur une distance d'échange de chaleur (6), comme un système (7) de conduits à peu près parallèles dont les conduits sont en relation fonctionnelle entre eux, thermiquement, et dans lequel les écoulements peuvent être orientés à contre-courant,
**caractérisé en ce que** le système de conduits (7) se compose d'une multiplicité de modules de conduits qui sont disposés côte à côte et qui comportent chacun au moins un conduit d'évacuation (15) et au moins un conduit d'amenée (16),
et **en ce que** les modules de conduits (7) ont au moins un conduit supplémentaire autonome (39) qui est en relation fonctionnelle, thermiquement, avec la conduite de gaz brûlés (2) et avec la conduite d'air frais (3), étant précisé que grâce à ce conduit supplémentaire, un produit liquide ou gazeux peut être acheminé indépendamment desdites conduites de gaz brûlés et d'air frais de telle sorte que l'échange de chaleur entre la conduite de gaz brûlés et la conduite d'air frais puisse être influencé.

2. Dispositif selon la revendication 1, **caractérisé en ce que** le conduit supplémentaire est en relation fonctionnelle avec une pompe à chaleur (47) qui est reliée à un réservoir d'eau.

3. Dispositif selon la revendication 1 ou 2, **caractérisé en ce que** chaque module de conduits dispose d'un groupe de conduits d'évacuation et d'un groupe de conduits d'amenée.

4. Dispositif selon la revendication 3, **caractérisé en ce que** le conduit supplémentaire (39) est disposé entre le groupe de conduits d'évacuation (15) et le groupe de conduits d'amenée (16).

5. Dispositif selon l'une des revendications 1 à 4, **caractérisé en ce que** le système de conduits (7) forme au moins partiellement une cheminée (8) du dispositif de chauffage, la distance d'échange de chaleur présentant une longueur d'au moins 2,5 mètres.

6. Dispositif selon l'une des revendications 1 à 5, **caractérisé en ce que** la conduite de gaz brûlés (2) et la conduite d'air frais (3) sont pourvues chacune d'au moins une soufflante (9, 10).

7. Dispositif selon la revendication 6, **caractérisé en ce que** les soufflantes sont reliées à un dispositif de commande (12) et **en ce que** leur débit est apte à être commandé pour faire varier l'intensité du processus de chauffage et/ou d'aération.

8. Dispositif selon l'une des revendications 1 à 7, **caractérisé en ce que** la source de chaleur (1) est reliée à la pièce (4) par une conduite d'amenée (17) et **en ce que** la conduite d'évacuation d'air (5) est conçue comme une déviation entre la conduite d'amenée d'air (17) et la conduite de gaz brûlés (2), l'air d'évacuation provenant de la pièce pouvant être amené entièrement ou partiellement vers la source de chaleur (1) ou être amené entièrement ou partiellement dans la conduite de gaz brûlés en contournant la source de chaleur.

9. Dispositif selon l'une des revendications 1 à 8, **caractérisé en ce que** les modules de conduits (14) sont disposés les uns derrière les autres.

10. Dispositif selon l'une des revendications 1 à 9, **caractérisé en ce que** le système de conduits est en métal, en particulier en aluminium ou en alliage d'aluminium.

11. Dispositif selon l'une des revendications 1 à 9, **caractérisé en ce que** le système de conduits se compose d'une matière minérale, en particulier de béton.

12. Dispositif selon l'une des revendications 1 à 11, **caractérisé en ce que** le système de conduits présente au moins partiellement une capacité d'accumulateur de chaleur.

13. Bâtiment avec au moins un dispositif de chauffage et/ou d'aération selon l'une des revendications 1 à 12.

14. Procédé pour chauffer et/ou aérer une pièce, selon lequel
- une chaleur de chauffage est produite par la combustion d'un combustible,
- les gaz de combustion sont évacués par l'intermédiaire d'une conduite de gaz brûlés (2),
- de l'air frais est amené dans la pièce (4) par l'intermédiaire d'une conduite d'air frais (3),
- l'air frais est préchauffé dans un échangeur de chaleur qui est en relation fonctionnelle avec la conduite de gaz brûlés,
- l'air d'évacuation provenant de la pièce est introduit comme air d'amenée soit entièrement dans la combustion,
- soit en partie dans la combustion et en partie dans la conduite de gaz brûlés,
- soit entièrement dans la conduite de gaz brûlés, et
- l'air d'évacuation ou les gaz de combustion d'une part, et l'air frais d'autre part passent à contre-courant dans un système de conduits à peu près parallèles, en vue de l'échange de chaleur sur une distance d'échange de chaleur,
**caractérisé en ce que** l'air d'évacuation ou les gaz de combustion et l'air frais traversent une multiplicité de modules de conduits disposés côte à côte qui forment ensemble le système de conduits, et **en ce que** sur la distance d'échange de chaleur, grâce à un conduit supplémentaire autonome (39) des modules de conduits qui est en relation fonctionnelle, thermiquement, avec la conduite de gaz brûlés (2) et avec la conduite d'air frais (3), un produit liquide ou gazeux supplémentaire est introduit dans l'échangeur de chaleur de telle sorte que l'échange de chaleur entre la conduite de gaz brûlés et la conduite d'air frais soit influencé.

15. Procédé selon la revendication 14, **caractérisé en ce que** de l'eau sanitaire est introduite dans le conduit supplémentaire autonome et est ainsi éventuellement préchauffée avant d'être chauffée dans un chauffe-eau.

16. Procédé selon la revendication 14, **caractérisé en ce que** l'amenée ou l'évacuation de chaleur par le conduit supplémentaire se fait avec une pompe à chaleur (47) qui est reliée à un réservoir d'eau.

17. Procédé selon l'une des revendications 14 à 16, **caractérisé en ce que** de la chaleur provenant de l'air d'évacuation ou des gaz brûlés ou de l'air frais est emmagasinée dans les parois du système de conduits pendant une phase de fonctionnement, et est redégagée dans l'air frais pendant une phase de fonctionnement ultérieure.
